# EUROPEAN PATENT APPLICATION

(11) **EP 4 621 950 A1**
(43) Date of publication of application: **24.09.2025**
(21) Application number: 24215417.7
(22) Date of filing: 26.11.2024
(51) Int. Cl.: H01M 50/204, H01M 50/209, H01M 50/249, H01M 50/262, H01M 50/291, H01M 10/653, H01M 10/658

(54) **BATTERY MODULE AND BATTERY PACK INCLUDING THE SAME**

(30) Priority: 21.03.2024 KR 20240038886
(71) Applicant: SAMSUNG SDI CO., LTD., Yongin-si, Gyeonggi-do 17084 (KR)
(72) Inventor: CHO, Man Sik, 17084 Yongin-si (KR); HYUN, Seung Joo, 17084 Yongin-si (KR); KIM, Myung Chul, 17084 Yongin-si (KR); JEON, Du Seong, 17084 Yongin-si (KR); KIM, Dong Hyeong, 17084 Yongin-si (KR); KIM, Jeong Ho, 17084 Yongin-si (KR); NAM, Jin Won, 17084 Yongin-si (KR); YEOM, Gil Choun, 17084 Yongin-si (KR)
(74) Representative: Marks & Clerk LLP

(57) **Abstract**

A battery module includes battery cells arranged in one direction, first insulating members each of which is between a pair of adjacent battery cells and has an upwardly extending extension portion, a second insulating member above the battery cells, the second insulating member being configured to allow the extension portion to extend therethrough and be exposed therefrom, a pair of end plates at opposite ends of the battery cells in the one direction, and a pair of side plates along the battery cells in the one direction and coupled to the end plates. Due to the insulating members, propagation of heat to neighboring battery cells may be prevented or at least mitigated even if the distance between the neighboring cells is reduced. Consequently, it is possible to increase the capacity and energy density of each of the battery cells.

## Description

### BACKGROUND

### 1. Field

Embodiments relate to a battery module and a battery pack including the same.

### 2. Description of the Related Art

Unlike primary batteries that are not designed to be (re)charged, secondary (or rechargeable) batteries are batteries that are designed to be discharged and recharged. Low-capacity secondary batteries are used in portable small electronic devices, such as smart phones, feature phones, notebook(laptop) computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A battery pack applied to vehicles is safety-critical, and therefore it is desirable to improve cooling performance, which is one of the factors that influence safety.

The information disclosed in this section is provided only for enhancement of understanding of the background of the disclosure and therefore it may contain information that does not constitute related (or the prior) art.

### SUMMARY

Embodiments provide a battery module with improved insulation between cells and a battery pack including the same.

These and other aspects and features of the present disclosure will be described in or will be apparent from the following description of embodiments of the present disclosure.

A battery module according to an embodiment of the present disclosure includes battery cells arranged in one direction, first insulating members each of which is between a pair of adjacent battery cells and has an upwardly extending extension portion, a second insulating member above the battery cells that is configured to allow the extension portion to extend therethrough and be exposed therefrom, a pair of end plates at opposite ends of the battery cells in the one direction, and a pair of side plates extending along the battery cells in the one direction and coupled to the end plates.

Each of the battery cells may be a secondary battery including a case, a cap plate coupled to the case, and a positive electrode terminal and a negative electrode terminal on the cap plate and spaced apart from each other.

The battery module may further include busbars configured to electrically connect the positive electrode terminal and the negative electrode terminal to each other in series or in parallel and a busbar holder under the busbars to support the busbars, and including terminal holes being configured to allow the positive electrode terminal and the negative electrode terminal to extend therethrough.

The battery cell may have a cuboidal shape, and the first insulating member may have a plate shape corresponding to the shape of a long side surface of the battery cell.

The transverse length of the first insulating member may be greater than or equal to the transverse length of the long side surface of the battery cell.

The longitudinal length of the first insulating member may be greater than the longitudinal length of the battery cell.

The height of a peak of the first insulating member excluding the extension portion may be equal to or less than the height of an upper surface of the busbar holder.

The busbar holder may further include a slit configured to allow an upper end of the first insulating member to extend therethrough.

The slit of the busbar holder may have a length substantially corresponding to the transverse length of the first insulating member.

A vent may be provided on the cap plate, and the transverse length of the extension portion may be greater than the transverse length of the vent.

The transverse length of the extension portion may be less than the distance between the positive electrode terminal and the negative electrode terminal.

The transverse length of the extension portion may be less than the distance between one of the busbars above the positive electrode terminal and another one of the busbars above the negative electrode terminal.

The extension portion may have a longitudinal length and the extension portion may protrude from an upper surface of the busbar holder.

A peak of the extension portion may be lower than the busbar.

The peak of the extension may be higher than the busbar.

The second insulating member may have a rectangular plate shape with a length greater than or equal to the overall length of the battery cells in the one direction.

The second insulating member may include extension slits extending in the longitudinal direction through which the extension portion of each of the first insulating members is exposed.

The second insulating member may further include vent slits between the extension slits and each vent slit may correspond to the position of the vent of one of the battery cells.

The vent slits may be slits or recesses.

A battery pack according to an embodiment of the present disclosure includes battery modules and a housing configured to accommodate the battery modules.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a battery module according to an embodiment of the present disclosure;
FIG. 2 is a perspective view showing a battery cell and first and second insulating members according to an embodiment of the present disclosure;
FIG. 3 is a plan view of the first insulating member shown in FIG. 2;
FIG. 4 is a perspective view showing a battery cell and first and second insulating members according to another embodiment of the present disclosure;
FIG. 5 is a plan view of the first insulating member shown in FIG. 4;
FIG. 6 is a perspective view showing a part of the battery cell and the first insulating member shown in FIG. 2;
FIG. 7 is an enlarged perspective view showing the state in which a busbar is mounted to the battery cell and the first insulating member shown in FIG. 6;
FIG. 8 is a perspective view showing a part of the battery cell and the first insulating member shown in FIG. 2 in another direction;
FIG. 9 is a perspective view showing an installed state of the battery cell and the first insulating member shown in FIG. 8;
FIG. 10 is an enlarged perspective view showing the state in which a busbar is mounted to the battery cell and the first insulating member shown in FIG. 9;
FIG. 11 is a plan view showing the second insulating member shown in FIG. 2;
FIG. 12 is a plan view showing the second insulating member shown in FIG. 4;
FIGS. 13 and 14 are perspective views showing a battery pack including a secondary battery according to the present invention.
FIGS. 15 and 16 are perspective and side views of a vehicle including a battery pack according to the present invention.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Additionally, in order to facilitate understanding of the invention, the attached drawings are not drawn to scale and the dimensions of some components may be exaggerated. Additionally, the same reference numbers may be assigned to the same components in different embodiments.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the disclosure.

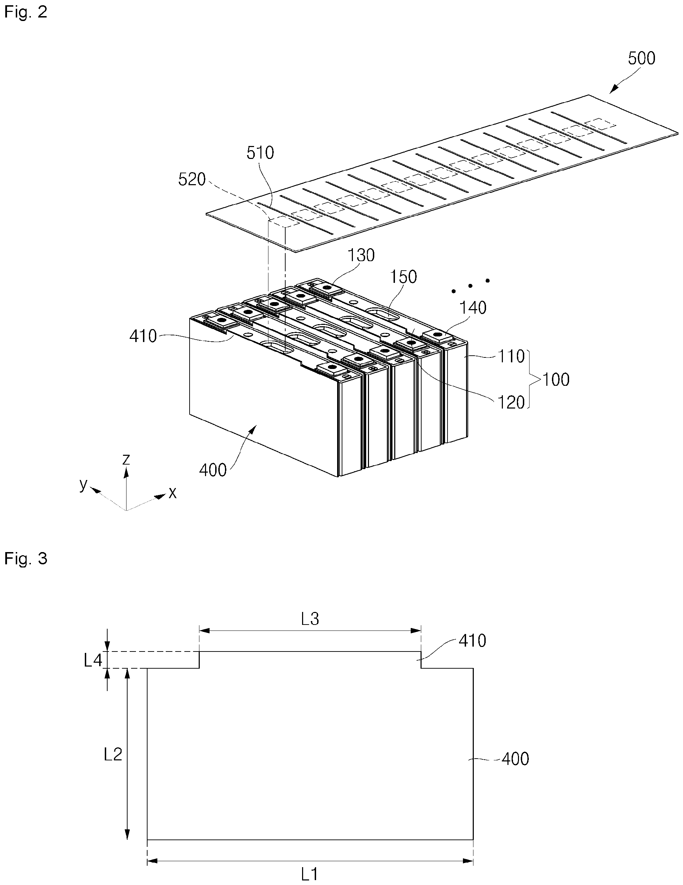

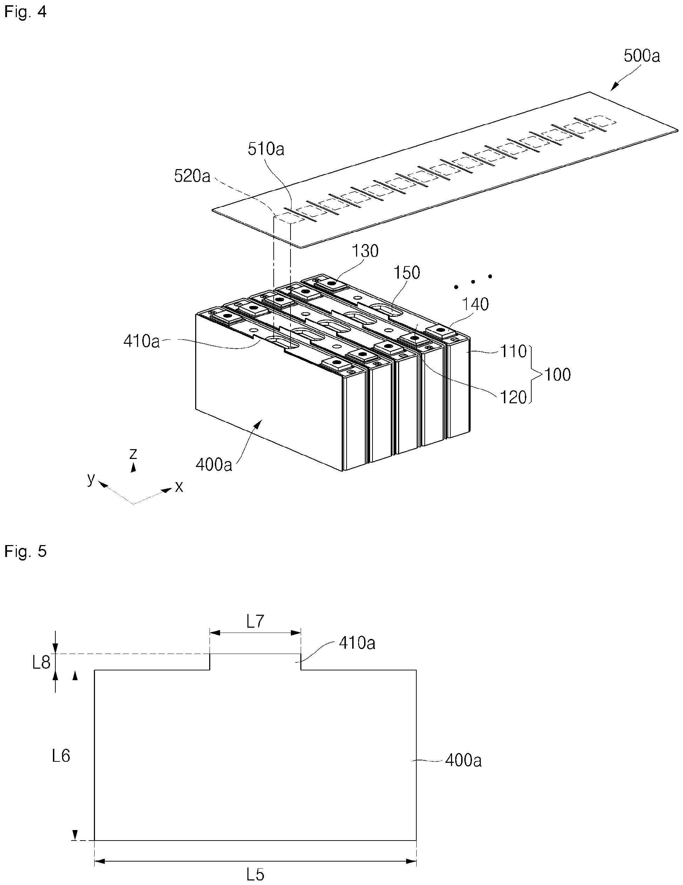

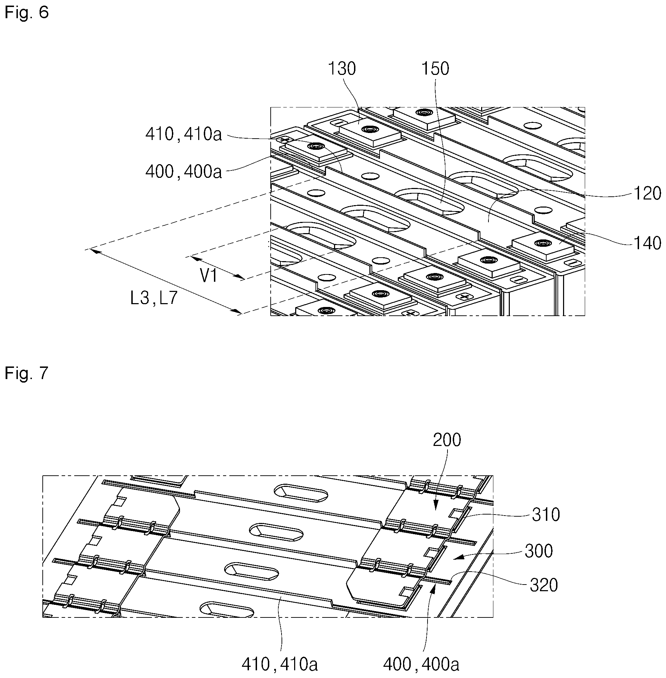

Hereinafter, a battery module according to an embodiment of the present disclosure will be described in detail with reference to the accompanying drawings (FIGs. 6 to 9 are based on the first insulating member 400 shown in FIG. 3, but the reference numeral of the first insulating member 400a shown in FIG. 5 is also shown for convenience).

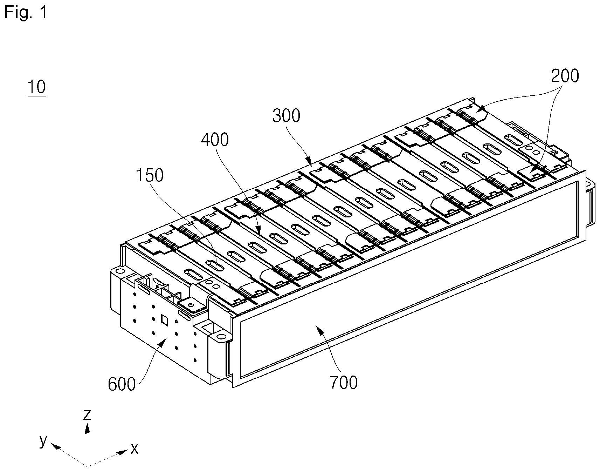

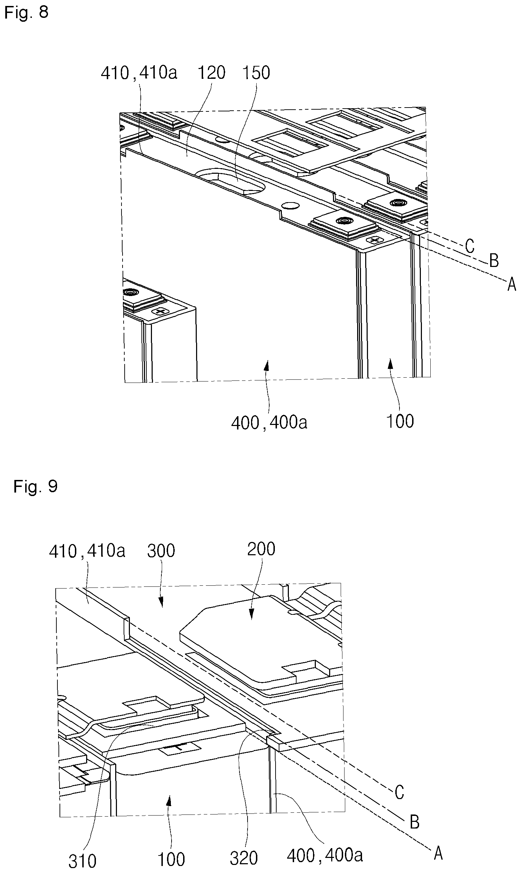

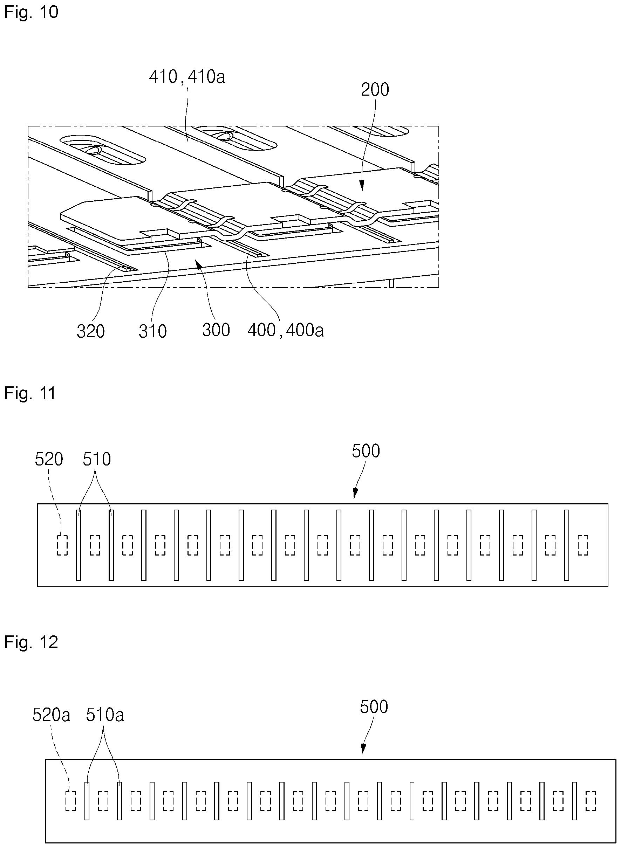

FIG. 1 is a perspective view showing a battery module according to an embodiment of the present disclosure. FIG. 2 is a perspective view showing a battery cell and first and second insulating members according to an embodiment of the present disclosure. FIG. 3 is a plan view of the first insulating member shown in FIG. 2. FIG. 4 is a perspective view showing a battery cell and first and second insulating members according to another embodiment of the present disclosure. FIG. 5 is a plan view of the first insulating member shown in FIG. 4. FIG. 6 is a perspective view showing a part of the battery cell and the first insulating member shown in FIG. 2. FIG. 7 is an enlarged perspective view showing a configuration in which a busbar is mounted to the battery cell and the first insulating member shown in FIG. 6. FIG. 8 is a perspective view showing a part of the battery cell and the first insulating member shown in FIG. 2 in another direction. FIG. 9 is a perspective view showing an installed state of the battery cell and the first insulating member shown in FIG. 8. FIG. 10 is an enlarged perspective view showing a configuration in which a busbar is mounted to the battery cell and the first insulating member shown in FIG. 9. FIG. 11 is a plan view showing the second insulating member shown in FIG. 2. FIG. 12 is a plan view showing the second insulating member shown in FIG. 4.

Referring now to FIGs. 1 to 7, the battery module 10 according to an embodiment of the present disclosure may include a plurality of battery cells 100 and a plurality of busbars 200 configured to electrically connect the battery cells 100 to each other. A busbar holder 300 may be between the battery cells 100 and the busbar 200. The battery module 10 may further include a first insulation member 400 and a second insulation member 500 configured to insulate the battery cells 100, and an end plate 600 and a side plate 700 configured to support and fix the battery cells 100. A cooling device for cooling and a bottom plate configured to support a lower part of the battery cell 100 may be provided under the battery cells 100.

In one or more embodiments, each of the battery cells 100 may be a lithium-ion secondary battery having a cuboidal shape. Each battery cell 100 may have a cuboidal shape, and the plurality of battery cells 100 may be arranged in a row in a certain direction (e.g., x-axis direction in FIG. 1). The plurality of battery cells 100 may be arranged with relatively wide plate surfaces facing each other. A first insulating member 400 configured to prevent heat propagation may be located between each pair of adjacent battery cells 100. A second insulating member 500 configured to prevent heat propagation may be above the battery cell 100.

Referring to FIGs. 2 and 4, each battery cell 100 may include a case 110 having a cuboidal shape with an opening at one side, an electrode assembly accommodated in the case 110, and a cap plate 120 coupled to the open side of the case 110 to seal the case 110. A positive electrode terminal 130 and a negative electrode terminal 140 electrically connected to the electrode assembly may be provided on the cap plate 120. A vent 150 may be provided on the cap plate 120. The vent 150 may have a smaller thickness than the remaining portion of the cap plate 120, and the vent 150 may be configured to rupture to discharge gas in the battery cell 100 in response to the internal pressure increasing.

In an embodiment, the case may have a cuboidal shape with an opening at one surface. Consequently, the case may include a pair of long side surfaces having a relatively large area, a pair of short side surfaces configured to connect the long side surfaces to each other and having a relatively small area, and a bottom surface that is both a short side surface and a bottom. The case may have a cuboidal shape with an open upper surface. The case may include a metal, such as aluminium or stainless steel.

The electrode assembly may be accommodated in the case along with an electrolytic solution (liquid, gel, or solid electrolyte). The electrolytic solution may include a lithium salt such as LiPF₆ or LiBF₄, having an organic solvent such as ethylene carbonate (EC), propylene carbonate (PC), diethyl carbonate (DEC), ethylmethyl carbonate (EMC), or dimethyl carbonate (DMC).

In one or more embodiments, the electrode assembly may be configured to have a structure in which a positive electrode plate and a negative electrode plate are wound or stacked in a configuration in which a separator is interposed between the positive and negative electrode plates. Each of the positive electrode plate and the negative electrode plate may include an active material region coated with a positive electrode active material or a negative electrode active material on a thin metal foil substrate, and a non-coated portion region that is not coated with an active material. In an embodiment, the positive electrode plate may be provided by coating an active material, such as a transition metal oxide, on a substrate made of metal foil, such as aluminium foil. The negative electrode plate may be provided by coating an active material, such as carbon or graphite, on a substrate made of metal foil such as copper or nickel foil. The positive electrode non-coated portion and the negative electrode non-coated portion may be provided in opposite directions. A positive electrode tab may be connected to the positive electrode non-coated portion, and a negative electrode tab may be connected to the negative electrode non-coated portion. In other embodiments, the positive electrode tab and the negative electrode tab may be provided by notching the positive electrode non-coated portion and negative electrode non-coated portion in a certain shape. The positive electrode tab and the negative electrode tab may be electrically connected to the positive electrode terminal 130 and the negative electrode terminal 140, respectively. The busbar 200 may be connected to the positive electrode terminal 130 and the negative electrode terminal 140.

Referring to FIGs. 1 and 7, the plurality of busbars 200 may electrically connect adjacent positive electrode terminals 130 and negative electrode terminals 140 of the plurality of battery cells 100 to each other in series or in parallel. The busbar 200 may be mounted on top of the positive electrode terminal 130 and the negative electrode terminal 140 by the busbar holder 300. The busbar 200 may serve to electrically connect the battery cell 100 to the outside via the positive electrode terminal 130 and the negative electrode terminal 140.

Referring to FIGs. 1, 7, and 8, the busbar holder 300 may have a rectangular plate shape and may be sized to cover the entire top of the battery cells 100. The busbar holder 300 may be provided with a plurality of terminal holes 310 through which positive electrode terminals 130 and negative electrode terminals 140 are exposed, and a plurality of slits 320 through which a part of the first insulating member 400, a description of which will follow, is exposed. The slit 320 may have a length corresponding to the transverse lengths L1 or L5 of the first insulating member 400 or 400a, a description of which will follow. The width of the slit 320 may be equal to or be greater than the thickness of the first insulating member 400 or 400a. The terminal holes 310 may be provided in a row in the direction of arrangement of the positive electrode terminal 130 and the negative electrode terminal 140. The slit 320 may be disposed between the respective terminal holes 310 in the y-axis direction of FIG. 1. The terminal hole 310 and the slit 320 may not communicate with each other or may not interfere with each other. The busbar holder 300 may be made of an insulating material. The busbar holder 300 may serve to support the busbar 200 if the busbar 200 is seated on the terminals exposed through the terminal holes 310.

Referring to FIGs. 2 and 4, one of the first insulating members 400 may be between each pair of adjacent battery cells 100. The first insulating members 400 may prevent direct contact between the long side surfaces of adjacent battery cells 100. The first insulating member 400 may be configured to insulate and prevent (or at least mitigate) heat propagation in the event of a fire. The second insulating member 500 may be above the battery cells 100. The second insulating member 500 may be arranged in the alignment direction (e.g., x-axis direction) of the battery cells 100 based on the position of the vents 150 of adjacent battery cells 100. The second insulating member 500 may be configured to protect the vent 150 regions of the battery cells 100 that are thinner than the cap plates 120 from heat propagation. The first insulating member 400 and the second insulating member 500 will be described in more detail later.

Referring to FIG. 1, a pair of end plates 600 may be provided, and each of the end plates 600 may have an approximately cuboidal shape. The end plates 600 may face the outermost ones of the plurality of battery cells 100. The pair of end plates 600 may be symmetric (or substantially symmetric) to each other. The end plates 600 may support the plurality of battery cells 100 in the x-direction. The side plates 700 may be coupled to both sides of the end plates 600. One of the first insulating members 400 may be between the end plate 600 and the outermost battery cell 100.

Referring to FIG. 1, the side plate 700 may have a size to cover at least a part of the side surfaces of the plurality of battery cells 100. The side plate 700 may have a bar or plate shape. The side plate 700 may extend in a direction in which the pair of end plates 600 is connected to each other. In one or more embodiments, the side plate 700 may be a plate and may be coupled to each end of the end plate 600 in the y-axis direction. Based on FIG. 1, one end of the side plate 700 may be coupled to the front end plate 600, and the other end of the side plate 700 may be coupled to the rear end plate 600. Consequently, the side plate 700 may support the battery cell 100 from the side. The plurality of battery cells 100 may be physically bound to each other by the end plates 600 and the side plates 700. The side plates 700 may include an insulating material. In other embodiments in which the side plates 700 include a metal material, an insulating tape may be attached to the side plates 700 to prevent the side plates 700 from contacting the battery cells 100 or from being energized.

Hereinafter, the first insulating member 400 and the second insulating member 500 will be described in detail.

Referring to FIGs. 2, 3, and 6 to 10, the first insulating member 400 according to the embodiment of the present disclosure may be a plate having a predetermined thickness, and one of the first insulating members 400 may be between each pair of adjacent battery cells 100. The first insulating member 400 may have a rectangular shape corresponding to (e.g., matching) the shape of the long side surface of the battery cell 100. In the event of a fire or overheating in one of the battery cells 100, the first insulating member 400 is configured block or at least delay the propagation of heat or flames to battery cells 100 adjacent thereto. In one or more embodiments, the first insulating member 400 may include mica, a composite material including mica, or a combination of a mica layer and another insulating material. The first insulating member 400 may have an outwardly extending extension portion 410 corresponding to the position of the vent 150 of the battery cell 100.

Referring to FIGs. 4 to 7, the first insulating member 400a according to the other embodiment of the present disclosure may have the same structure as the first insulating member 400 shown in FIG. 3, but may differ only in the structure of the extension portion 410a.

Referring to FIGs. 2 to 7, the transverse length L1 or L5 (e.g., the width) of the first insulating member 400 or 400a may be equal to or greater than the transverse length of the long side surface of the battery cell 100 in order to block (or at least mitigate) heat propagation. The longitudinal length L2 or L6 (e.g., the height) of the first insulating member 400 or 400a may be greater than the longitudinal length of the long side surface of the battery cell 100. Based on to FIGs. 8 to 10, the peak B of the first insulating member 400 or 400a may be higher than the peak A of the battery cell 100 (the peak of the first insulating member 400 or 400a excluding the extension portion 410 or 410a is referred to as B). However, the peak B of the first insulating member 400 or 400a may be equal to or lower than the height of an upper surface of the busbar holder 300. Based on the busbar 200, the peak B of the first insulating member 400 or 400a may be equal to or lower than the height of a lower end of the busbar 200. Consequently, the peak B of the first insulating member 400 or 400a does not interfere with the busbar 200. In the above structure, it is possible to block or at least delay the propagation of heat or flames and to protect the weld and the vent 150 between the cap plate 120 and the case of each of the battery cells 100 adjacent to the battery cell 100 in which heat or flames are generated.

The transverse length L3 or L7 (e.g., width) of the extension portion 410 or 410a may be greater than the transverse length V1 of the vent 150 of the battery cell 100. In the embodiment of FIG. 3, the transverse length L3 of the extension portion 410 may be greater than the transverse length V1 of the vent 150, and may be less than the distance between the positive electrode terminal 130 and the negative electrode terminal 140. The transverse length L3 of the extension portion 410 may be less than the distance between the busbars 200, a description of which will follow, to prevent interference during installation of the busbar 200 above the positive electrode terminal 130 and above the negative electrode terminal 140. The transverse length L7 of the extension portion 410a according to the embodiment of FIG. 5 may be less than the transverse length L3 of the extension portion 410 according to the embodiment of FIG. 3.

Referring to FIGs. 3, 5, and 8 to 10, the longitudinal length L4 or L8 (e.g., the height) of the extension portion 410 or 410a of the first insulating member 400 or 400a may be greater than the height of the upper surface of the busbar holder 300. The longitudinal length L4 or L8 of the extension portion 410 or 410a may be the maximum height of the battery module 10. The longitudinal length of the extension portion 410 or 410a may have a length by which the extension portion 410 or 410a is in contact with or is adjacent to a lower surface of a top cover coupled to the top of the battery module 10. The longitudinal length L4 or L8 of the extension portion 410 or 410a may have a length that is higher than the height of the upper surface of the busbar holder 300 and is lower than or equal to the maximum height of the battery module 10. Based on FIG. 8, the peak C of the extension portion 410 or 410a may be higher than the upper surface of the busbar holder 300. Because the longitudinal length L4 or L8 of the extension portion 410 or 410a is greater than the height of the upper surface of the busbar holder 300, the slit 320 may be provided in the busbar holder 300. The extension portion 410 or 410a may be exposed to the upper surface of the busbar holder 300 through the slit 320. In an embodiment in which the longitudinal length L4 or L8 of the extension portion 410 or 410a is the minimum length, the peak C of the extension portion 410 or 410a may be lower than the busbar 200. In an embodiment in which the longitudinal length L4 or L8 of the extension portion 410 or 410a is the maximum length, the peak C of the extension portion 410 or 410a may be higher than the busbar 200.

Referring to FIGs. 2, 4, 11, and 12, the second insulation member 500 or 500a according to the embodiment of the present disclosure may be configured to protect the vent 150 of the battery cell 100. The vent 150 may have a thickness less than the thickness of the cap plate 120 such that the vent 150 is configured to rupture in response to the internal pressure increasing. The vent 150 may be vulnerable to heat propagation due to ignition of battery cells 100 adjacent thereto. Although the vent 150 is primarily protected by the extension portion 410 or 410a of the first insulating member 400 or 400a, the second insulating member 500 or 500a may provide for additional protection.

The second insulation member 500 or 500a may be a rectangular plate and may include a similar or identical material to the first insulation member 400. The x-axis length of the second insulating member 500 or 500a may be equal to or greater than the x-axis length of the plurality of battery cells 100. The y-axis length (e.g., width) of the second insulating member 500 or 500a may be less than the distance between the positive electrode terminal 130 and the negative electrode terminal 140 of the battery cell 100. The minimum y-axis length of the second insulating member 500 or 500a may be greater than the transverse length L3 or L7 of the extension portion 410 or 410a of the first insulating member 400 or 400a. The extension portion 410 or 410a of the first insulating member 400 or 400a may extend through the second insulating member 500 or 500a and be exposed to the outside through the slit 320 of the busbar holder 300. The second insulating member 500 or 500a may include a plurality of extension slits 510 or 510a through which the extension portions 410 or 410a of the first insulating members 400 or 400a extend. As shown in FIGs. 2 and 11, each of the extension slits 510 may have a length in the y-axis direction corresponding (or substantially corresponding) to the length of extension portion 410 of the first insulating member 400 in the y-axis direction shown in FIG. 3. As shown in FIGs. 4 and 12, the extension slit 510a may have a length corresponding (or substantially corresponding) to the extension portion 410a of the first insulating member 400a shown in FIG. 5. The number of extension slits 510 or 510a may be the same number as the number of first insulating members 400 or 400a.

Furthermore, the second insulating member 500 or 500a may include a plurality of vent slits 520 or 520a corresponding to the position of the vents 150 of the battery cells 100. The vent slit 520 or 520a may be larger than the transverse and longitudinal lengths of the vent 150. The vent slits 520 or 520a may include a plurality of slits or recesses arranged in an approximately rectangular shape. In other embodiments, the vent slit 520 or 520a may be a rectangular region having a smaller thickness than the remaining portion of the second insulating member 500 or 500a. The vent slit 520 or 520a may be a slit, a recess, and/or a region having a small thickness such that the vent slit 520 or 520a is configured to rupture simultaneously (or substantially simultaneously) with rupture of the vent 150. The vent 150 may be primarily protected by the extension portion 410 or 410a of the first insulating member 400 or 400a and may be further covered by the second insulating member 500 or 500a having the above-described structure. Consequently, the vents 150 may be effectively protected from the propagation of heat or flames.

The secondary battery according to the aforementioned embodiment may be used to manufacture a battery pack (reference numerals of components hereinafter described are applied only to the corresponding figures).

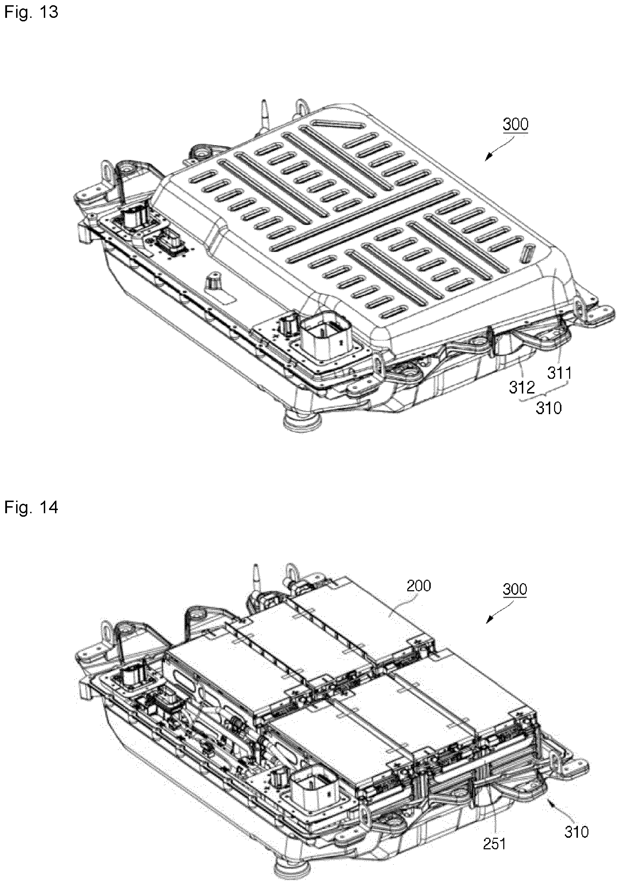

FIGS. 13 and 14 are perspective views showing a battery pack including a secondary battery 100.

Referring to Figures 13 and 14, the battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output. In the drawings, for convenience, components such as busbars for the electrical connection of battery cells, cooling units, and external terminals are omitted. In some examples, the battery pack 300 may be installed in a vehicle. The vehicle can be, for example, an electric vehicle, a hybrid vehicle, or a plug-in hybrid vehicle. The vehicle may include a four-wheel vehicle or a two-wheel vehicle.

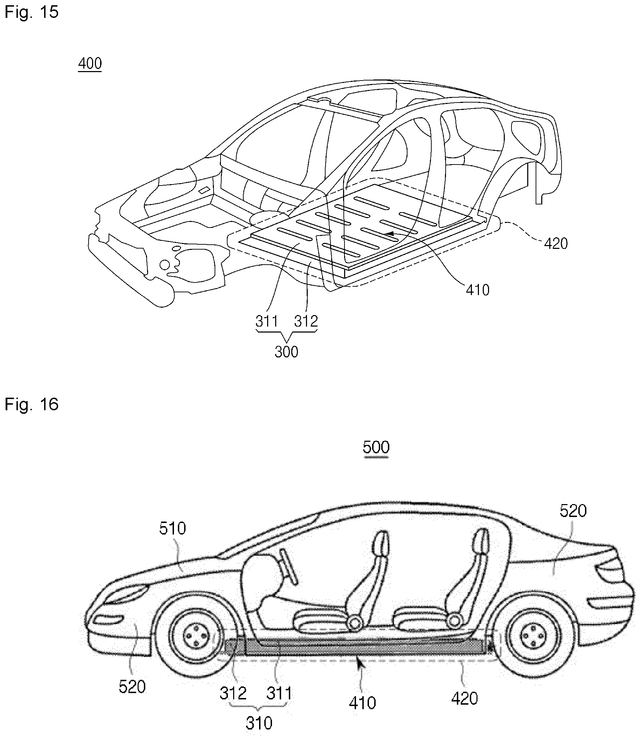

FIGS. 15 and 16 are perspective and side views of vehicles 400 and 500 including a battery pack 300 according to the present invention. In FIG. 15, a battery pack 300 may include a battery pack cover 311, which is a part of a vehicle underbody 410 and may correspond to the first housing, and a pack frame 312, which is disposed under the vehicle underbody 410 and may corresponding to the second housing. The battery pack cover 311 and the pack frame 312 may be integrally formed with a vehicle floor 420. The vehicle underbody 410 separates the inside and outside of a vehicle, and the pack frame 312 may be disposed outside the vehicle.

In FIG. 16, a vehicle 500 may be formed by combining additional parts, such as a hood 510 in front of the vehicle 500 and fenders 520 respectively located in the front and rear of the vehicle 500 to a vehicle body part 400. The vehicle 500 may include the battery pack 300 including the battery pack cover 311 and the pack frame 312, and the battery pack 300 may be coupled to the vehicle body part 400.

As is apparent from the above description, according to embodiments of the present disclosure, propagation of heat to neighboring battery cells may be prevented (or at least mitigated) even if the distance between the neighboring cells is reduced. Consequently, it is possible to increase the capacity and energy density of each of the battery cells.

According to embodiments of the present disclosure, it is possible to protect a vent of the battery cell, which is vulnerable to heat propagation, from hot gas, jellyroll fragments, flames, etc. generated during thermal runaway, and therefore it is possible to improve safety of a battery pack.

However, aspects and features of the present disclosure are not limited to those described above, and other aspects and features not mentioned will be clearly understood by a person skilled in the art from the detailed description, described below.

Although the present disclosure has been described above with reference to limited embodiments and drawings, the present disclosure is not limited thereby and various modifications and variations may be made by a person having ordinary skill in the art to which the present disclosure pertains within the technical ideas of the present disclosure and the equivalent scope of the appended claims.

Embodiments are set out in the following clauses:
1. A battery module comprising:
   a plurality of battery cells arranged in one direction;
   a plurality of first insulating members, each disposed between the battery cells and having an upwardly extending extension portion;
   a second insulating member disposed above the battery cells, the second insulating member being configured to allow the extension portion to extend therethrough and be exposed therefrom;
   a pair of end plates disposed respectively at opposite ends of the battery cells in an arrangement direction of the battery cells; and
   a pair of side plates disposed in the arrangement direction of the battery cells and coupled to the end plates.
Clause 2. The battery module of clause 1, wherein each of the battery cells is a secondary battery comprising a case, a cap plate coupled to the case, and a positive electrode terminal and a negative electrode terminal disposed on the cap plate so as to be spaced apart from each other.
Clause 3. The battery module of clause 2, further comprising:
   a plurality of busbars configured to electrically connect the positive electrode terminal and the negative electrode terminal to each other in series or in parallel; and
   a busbar holder disposed under the busbars to support the busbars, and having a plurality of terminal holes being configured to allow the positive electrode terminal and the negative electrode terminal to extend therethrough.
Clause 4. The battery module of clause 3, wherein
   the battery cell has a cuboidal shape, and
   the first insulating member has a plate shape corresponding to a shape of a long side surface of the battery cell.
Clause 5. The battery module of clause 4, wherein a transverse length of the first insulating member is greater than or equal to a transverse length of the long side surface of the battery cell.
Clause 6. The battery module of clause 5, wherein a longitudinal length of the first insulating member is greater than a longitudinal length of the battery cell.
Clause 7. The battery module of clause 6, wherein
   a height of a peak (B) of the first insulating member excluding the extending portion is equal to or less than a height of an upper surface of the busbar holder.
Clause 8. The battery module of clause 7, wherein the busbar holder further comprises a slit configured to allow an upper end of the first insulating member and the connection portion to extend therethrough.
Clause 9. The battery module of clause 8, wherein the slit of the busbar holder has a length corresponding to the transverse length of the first insulating member.
Clause 10. The battery module of clause 9, wherein
   a vent is provided on the cap plate, anda transverse length of the extension portion is greater than a transverse length of the vent.
Clause 11. The battery module of clause 10, wherein the transverse length of the extension portion is less than a distance between the positive electrode terminal and the negative electrode terminal.
Clause 12. The battery module of clause 11, wherein the transverse length of the extension portion is less than a distance between the busbar above the positive electrode terminal and the busbar above the negative electrode terminal.
Clause 13. The battery module of clause 12, wherein the extension portion has a longitudinal length by which the extension portion protrudes from an upper surface of the busbar holder.
Clause 14. The battery module of clause 13, wherein, if the longitudinal length of the extension portion is a minimum length, a peak (C) of the extension portion is lower than the busbar.
Clause 15. The battery module of clause 14, wherein, if the longitudinal length of the extension portion is a maximum length, the peak (C) of the extension is higher than the busbar.
Clause 16. The battery module of clause 15, wherein the second insulating member has a rectangular plate shape with a length greater than or equal to an overall length of the batter cells in the arrangement direction of the battery cells.
Clause 17. The battery module of clause 16, wherein the second insulating member comprises a plurality of extension slits through which the extension portion is exposed in the longitudinal direction.
Clause 18. The battery module of clause 17, wherein the second insulating member further comprises a plurality of vent slits disposed between the extension slits and corresponding to a position of the vent.
Clause 19. The battery module of clause 18, wherein the vent slits are provided as a plurality of slits or recesses.
Clause 20. A battery pack comprising:
   a plurality of battery modules of any one of clauses 1 to 19; and
   a housing configured to receive the battery modules.

## Claims

1. A battery module comprising:
a plurality of battery cells arranged in one direction;
a plurality of first insulating members, each first insulating member of the plurality of first insulating members being between a pair of adjacent battery cells of the plurality of battery cells and having an upwardly extending extension portion;
a second insulating member above the plurality of battery cells, the second insulating member being configured to allow the upwardly extending extension portion to extend therethrough and to be exposed therefrom;
a pair of end plates at opposite ends of the plurality of battery cells in the one direction; and
a pair of side plates extending along the plurality of battery cells in the one direction and coupled to the end plates.

2. The battery module as claimed in claim 1, wherein each of the battery cells is a secondary battery comprising a case, a cap plate coupled to the case, and a positive electrode terminal and a negative electrode terminal on the cap plate and spaced apart from each other.

3. The battery module as claimed in claim 2, further comprising:
a plurality of busbars configured to electrically connect the positive electrode terminal and the negative electrode terminal to each other in series or in parallel; and
a busbar holder under the plurality of busbars to support the plurality of busbars, the busbar holder comprising a plurality of terminal holes configured to allow the positive electrode terminal and the negative electrode terminal to extend therethrough.

4. The battery module as claimed in claim 2 or claim 3, wherein:
each battery cell of the plurality of battery cells has a cuboidal shape, and
the each first insulating member has a plate shape corresponding to a shape of a long side surface of the each battery cell of the plurality of battery cells.

5. The battery module as claimed in claim 4, wherein a transverse length of the each first insulating member is greater than or equal to a transverse length of the long side surface of the each battery cell.

6. The battery module as claimed in claim 5, wherein a longitudinal length of the each first insulating member is greater than a longitudinal length of the each battery cell.

7. The battery module as claimed in claim 6, wherein a height of a peak of the each first insulating member excluding the upwardly extending extension portion is equal to or less than a height of an upper surface of the busbar holder.

8. The battery module as claimed in any one of claims 3 to 7, wherein the busbar holder further comprises a slit configured to allow an upper end of one of the plurality of first insulating members to extend therethrough, optionally wherein the slit of the busbar holder has a length substantially corresponding to the transverse length of the one of the plurality of first insulating members.

9. The battery module as claimed in any one of claims 3 to 8, further comprising a vent in the cap plate, and wherein a transverse length of the upwardly extending extension portion is greater than a transverse length of the vent.

10. The battery module as claimed in claim 9, wherein the transverse length of the upwardly extending extension portion is less than a distance between the positive electrode terminal and the negative electrode terminal, optionally wherein the transverse length of the upwardly extending extension portion is less than a distance between one of the plurality of busbars above the positive electrode terminal and another one of the plurality of busbars above the negative electrode terminal.

11. The battery module as claimed in any one of claims 3 to 10, wherein the upwardly extending extension portion has a longitudinal length and wherein the upwardly extending extension portion protrudes from an upper surface of the busbar holder.

12. The battery module as claimed in claim 11, wherein:
(i) a peak of the upwardly extending extension portion is lower than the plurality of busbars; or
(ii) the peak of the upwardly extending extension portion is higher than the plurality of busbars.

13. The battery module as claimed in any one of claims 1 to 11, wherein:
(i) the second insulating member has a rectangular plate shape with a length greater than or equal to an overall length of the plurality of battery cells in the one direction; and/or
(ii) the second insulating member comprises a plurality of extension slits extending in a longitudinal direction through which the upwardly extending extension portion of each of the plurality of first insulating members is exposed.

14. The battery module as claimed in any one of claims 9 to 13, wherein the second insulating member further comprises a plurality of vent slits between the plurality of extension slits, each vent slit of the plurality of vent slits corresponding to a position of the vent of one of the plurality of battery cells, optionally wherein the plurality of vent slits comprises a plurality of slits or recesses.

15. A battery pack comprising:
a plurality of battery modules, each of the plurality of battery modules being the battery module as claimed in any one of claims 1 to 14; and
a housing accommodating the plurality of battery modules.
